# EUROPEAN PATENT APPLICATION

(11) **EP 3 766 618 A1**
(43) Date of publication of application: **20.01.2021**
(21) Application number: 19187184.7
(22) Date of filing: 19.07.2019
(51) Int. Cl.: B23H 3/06, B23H 3/04, B23H 9/14

(54) **CATHODE FOR ELECTROCHEMICAL MACHINING WITH OPTIMIZED FLOW PARAMETERS**

(71) Applicant: MTU Aero Engines AG, 80995 München (DE)
(72) Inventor: Borto, Artur, 28-130 Stopnica (PL); Pankiewicz, Marek, 37-200 Przeworsk (PL)

(57) **Abstract**

The present invention relates to a cathode (**1**) for electrochemical machining (ECM) with optimized flow parameters. The cathode (**1**) is formed as a hollow tube (**3**) of electrically conducting material having a face (**2**) at its working end, and includes a channel (**4**) for guiding electrolyte flow out of the working end. On its outer side (**5**) the hollow tube (**3**) has an electrically insulating layer, which extends up to the face (**2**) of the hollow tube (**3**) and comprises a first portion (**7**) extending along the major part of the hollow tube (**3**) and a second rounded portion (**8**) adjacent to the face (**2**) of the hollow tube (**3**). The first portion (**7**) and the second portion (**8**) are made of different electrically insulating materials, whereby the material of the first portion (**7**) has a relatively lower electrical resistance than the material of the second portion (**8**).

## Description

### Technical field

The present invention generally relates to a cathode for electrochemical machining (ECM) with optimized flow parameters. The cathode is designed for use in general ECM machining, in particular in aerospace industry.

### Background art

Electrochemical machining (ECM) is a method of removing metal by an electrochemical process. It is normally used for mass production and is used for working extremely hard materials or materials that are difficult to machine using conventional methods. Its use is limited to electrically conductive materials. ECM allows to cut small or odd-shaped angles, intricate contours or cavities in hard and exotic metals, such as titanium aluminides, Inconel, Waspaloy, and high nickel, cobalt, and rhenium alloys. Both external and internal geometries can be machined.

ECM is often characterized as "reverse electroplating", since it removes material instead of adding it. In ECM a high current is passed between a tool being a negatively charged electrode (cathode) and a conductive workpiece (anode). Electrical contact between the tool and the workpiece is provided by a thin layer of an conductive fluid (electrolyte). Unlike in case of electrical discharge machining (EDM), in ECM process there is no tool wear. The ECM cutting tool is guided along the desired path close to the work but without touching the piece. Unlike EDM, however, no sparks are created. High metal removal rates are possible with ECM, with no thermal or mechanical stresses being transferred to the part, and mirror surface finishes can be achieved.

In a typical ECM process, the tool is advanced into the workpiece. The pressurized electrolyte is injected at a set temperature to the area being cut. The feed rate is the same as the rate of "liquefication" of the workpiece material. The gap between the tool and the workpiece usually varies within 80-800 µm. As electrons cross the gap, the workpiece material is dissolved; in this way the tool forms the desired shape in the workpiece. The electrolytic fluid carries away the metal hydroxide formed in the process.

The ECM process is most widely used to produce complicated shapes such as turbine blades with good surface finish in materials difficult to machine mechanically. It is also widely and effectively used as a deburring process.

In prior art ECM processes are known that produce insulation layers made of homogenous material. Such insulation layer has a rectangular shape in a front section view. Consequently, the outflow of contaminated electrolyte from the machining area is turbulent and may lead to clogging and accumulation of undesired waste material (suspended in the electrolyte) in the machining gap. It negatively affects the machining accuracy and makes the process control more difficult.

US 3,748,252 discloses an electrode for electrochemically machining small holes. The electrode is in form of a hollow metallic tube, having an operative tip at one end and a thin dielectric coating, preferably made of polymer, at least on the outer side of the tube. The coating terminates adjacent to the operative tip in a tapering surface resulting from evaporating the dielectric material by a laser beam, said surface smoothly blending with the wall surface of the tube. Thereby a tendency of the electrolyte flow containing waste material to peel the dielectric material from the surface of the tube during the ECM process is reduced and accordingly the lifetime of the tool is prolonged.

Further, DE102006025456A1 discloses an electrode for an ECM process having at least one ECM-active region, and at least one ECM-inactive region, preferably made of electrically insulating material or provided with an electrically insulating coating. The electrode outer surface is shaped so as to provide a laminarized flow of an electrolyte solution through a gap between the electrode and the workpiece being processed. Preferred shapes of the electrode outer surface and in particular the EMC-inactive region(s) includes a drop-shaped geometry and a conical geometry. The laminarized flow of the electrolyte solution eliminates reduced pressure regions thereby suppressing formation of hydrogen gas bubbles and flushes the resulting hydrogen in dissolved form out of the machining gap.

Yet further, DE102006015442A1 discloses an electrode for an ECM process comprising an ECM-active section having an outside geometry tapered towards the electrode face end. The electrode has a centrally arranged electrolyte supply channel which opens in the end face of the ECM of the electrode. In one embodiment the lateral surface of the electrode is partially provided with an insulating coating. Although the preferred tapering geometry is formed as a truncated cone, other embodiments mentioned include a tapered geometry with an oval reference and end face or as a pyramid segment.

Moreover, US 3,336,213 discloses an ECM cathode consisting of a hollow metallic tube, provided from the outside with an intermediate layer of dielectric material, such as polytetrafluoroethylene, and an uncharged outer metallic portion encasing and embedded in the outer lateral surface of the intermediate layer at the working end of the electrode. The outer metallic portion, for example made of titanium, protects the tip portion of the working end of the electrode from wear and abrasion.

As already mentioned above, in the ECM process the gap between the cathode (tool) and the anode (workpiece) is vulnerable to clogging and accumulation of waste material. Another problem is the formation of hydrogen bubbles on the cathode surface, leading to cathode surface damage called hydrogen embrittlement. These problems are caused, among other reasons, by irregular flow of electrolyte in the machining gap.

### Summary of the invention

The aim of the present solution was to provide a cathode for ECM process that would optimize the flow parameters of the waste electrolyte flow in the gap between the working end of the cathode and the workpiece. In particular, the aim was to laminarize the waste electrolyte flow as much as possible to reduce hydrogen bubble formation and thereby the negative phenomenon of hydrogen embrittlement on both the cathode and the machined area of the workpiece. Another aim was to prevent the machining gap from clogging and accumulation of waste material. Yet another aim was to provide uniform electric insulation properties along the whole length of the outer side of the cathode, thereby increasing the accuracy of the ECM process by limiting the electrochemically active region of the cathode to the face of the working end thereof. These aims have been achieved by the present invention.

Accordingly, the present invention is related to a cathode for electrochemical machining formed as a hollow tube of electrically conducting material, such as a metal or a metallic alloy. The hollow tube has a face at its working end and includes a channel for guiding electrolyte flow out of the working end. On its outer side the hollow tube is provided with an electrically insulating layer extending up to the face of the hollow tube. The electrically insulating layer comprises a first portion extending along the major part of the hollow tube and a second rounded portion adjacent to the face of the hollow tube. The first portion and the second portion are made of different electrically insulating materials, whereby the material of the first portion has a relatively lower electrical resistance than the material of the second portion.

Preferably the face of the hollow tube is perpendicular to the longitudinal axis of the channel.

Preferably the first portion of the electrically insulating layer is made of a polymer, preferably polytetrafluoroethylene (PTFE).

Preferably the second portion of the electrically insulating layer is made of a polymer, preferably polyester.

Preferably the second portion of the electrically insulating layer has its rounding radius equal to the basic thickness of the electrically insulating layer.

The presence of the insulation layer along the entire length of the outer side of the hollow tube, i.e. extending up to the face thereof increases the accuracy of the ECM process by limiting the electrochemically active region of the cathode to the face of the working end thereof. The rounded/tapered geometry of the second portion of the insulation layer adjacent to the outer edge of the hollow tube face combined with the fact that the material of the second portion has higher electrical resistance than the material of the first portion of the insulating layer extending along the major part of the hollow tube results in the essentially uniform electric insulation capacity along the whole length of the insulating layer. Furthermore, the rounded geometry of the second portion allows to improve flow parameters the contaminated (waste) electrolyte leaving the machining gap along the insulation layer, namely to laminarize the flow, which in turn reduces the hydrogen embrittlement on both the cathode and the machined area of the workpiece. Laminarized flow character obtained by the above-mentioned features of the invention contributes as well to reduction of clogging and accumulation of the unwanted (waste) material such as metal hydroxide particles, carried along the electrolyte flow leaving the machining gap.

The insulating layer, preferably made of polymeric materials, can be deposited on the outer side of the hollow tube by plasma-enhanced chemical vapour deposition (PE-CVD) or aerosol-assisted chemical vapour deposition (AA-CVD), followed by shaping the required region, in particular the second portion adjacent to the face of the hollow tube, by a fluid stream in a manner as described in EP 3204200 A1. However, other methods of forming the insulation layer can be also used, such as additive manufacturing (AM) methods.

Unlike in prior art, exemplified by US 3,748,252, in the present invention only the coating is shaped, while the hollow tube made of electrically conducting material maintains its original geometry.

### Brief description of drawings

Exemplary embodiments of the invention are described with reference to the following figures, which are provided for the purpose of illustration only, the full scope of the invention being set forth in the claims that follow.
Fig. 1 is a cross-section of a cathode according to the invention;
Fig. 2 is an enlarged part of the cross-section of fig. 1.

### Detailed description of the exemplary embodiment

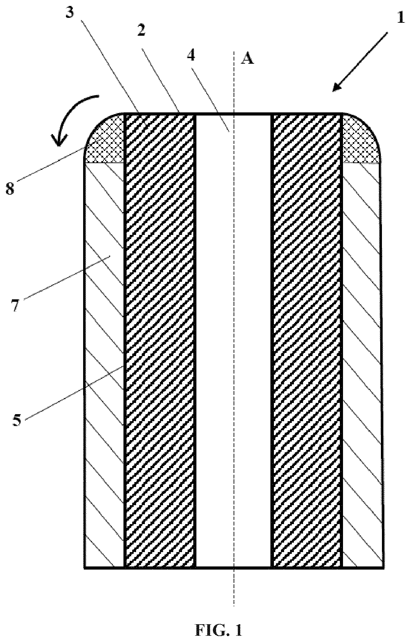

A cathode **1** according to the exemplary embodiment of the invention is shown in a cross-section in fig. 1. It is formed as a hollow tube **3** of electrically conducting material having a face **2** at its working end. The hollow tube **3** includes a channel **4** for guiding electrolyte flow out of the working end. The hollow tube **3** is provided on its outer side **5** with an electrically insulating layer. The insulating layer extending up to the face **2** of the hollow tube **3** comprises a first portion **7** extending along the major part of the hollow tube **3** and a second rounded portion **8** adjacent to the face **2** of the hollow tube **3**. The first portion **7** and the second portion **8** are made of different electrically insulating materials, whereby the material of the first portion **7** has a relatively lower electrical resistance than the material of the second portion **8**. The face **2** of the hollow tube **3** is perpendicular to the longitudinal axis **A** of the channel **4**.

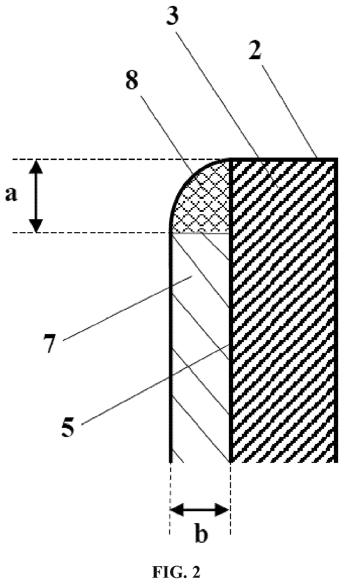

As shown in fig. 2 the second portion **8** of the electrically insulating layer has its rounding radius equal to the basic thickness **b** of the electrically insulating layer.

In one embodiment the width of the machining gap, i.e. the distance between the face **2** of the hollow tube **3** (being the electrochemically active part of the electrode in the ECM process) and the workpiece (acting as anode, not shown) is 80 µm. In such case the basic thickness **b** of the electrically insulating layer of the cathode **1** is 30 µm, and the distance **a** on which the second portion **8** extends from the outer edge of the face **2** of the hollow tube **3** along the outer side **5** of the same is 50 µm.

Preferably, the first portion **7** is made of PTFE and the second portion **8** is made of a polyester.

During the continuous ECM process the electrolyte fluid is pumped through the channel 4 and reaches the machining gap formed between the face **2** of the hollow tube **3** and the workpiece surface (not shown). The used electrolyte flow containing waste material such as in particular metal hydroxide particles is leaving the machining gap and is directed along the rounded second portion **8**, as shown by the arrow in fig. 1, and later along the first portion **7** of the insulation layer.

While the invention has been described in what is known as presently preferred embodiment, it is to be understood that the invention is not to be limited to the disclosed embodiment but, on the contrary, is intended to cover various modifications and equivalent arrangements within the scope of the following claims.

## Claims

1. A cathode (**1**) for electrochemical machining formed as a hollow tube (**3**) of electrically conducting material having a face (**2**) at its working end, wherein the hollow tube (**3**) includes a channel (**4**) for guiding electrolyte flow out of the working end, said hollow tube (**3**) being provided on its outer side (**5**) with an electrically insulating layer, **characterised in that** the insulating layer extends up to the face (**2**) of the hollow tube (**3**) and comprises a first portion (**7**) extending along the major part of the hollow tube (**3**) and a second rounded portion (**8**) adjacent to the face (**2**) of the hollow tube (**3**), wherein the first portion (**7**) and the second portion (**8**) are made of different electrically insulating materials, and wherein the material of the first portion (**7**) has a relatively lower electrical resistance than the material of the second portion (**8**).

2. The cathode (**1**) according to claim 1, wherein the face (**2**) of the hollow tube (**3**) is perpendicular to the longitudinal axis (**A**) of the channel (**4**).

3. The cathode (**1**) according to claim 1 or 2, wherein the first portion (**7**) of the electrically insulating layer is made of a polymer, preferably polytetrafluoroethylene (PTFE).

4. The cathode (**1**) according to any of the claims 1-3, wherein the second portion (**8**) of the electrically insulating layer is made of a polymer, preferably polyester.

5. The cathode (**1**) according to any of the claims 1-4, wherein the second portion (**8**) of the electrically insulating layer has its rounding radius equal to the basic thickness (**b**) of the electrically insulating layer.
